# EUROPEAN PATENT APPLICATION

(11) **EP 3 046 013 A1**
(43) Date of publication of application: **20.07.2016**
(21) Application number: 16151162.1
(22) Date of filing: 13.01.2016
(51) Int. Cl.: G06F 3/0482, G06F 3/0488, H04L 29/08, H04L 12/24, H04M 1/725

(54) **DYNAMICALLY RECONFIGURABLE SERVICE AND STATUS MANAGER**

(30) Priority: 13.01.2015 US 201562102700 P
(71) Applicant: WallRust, Inc., Sunnyvale, CA 94085 (US)
(72) Inventor: Locsei, Bence, 2318 Szigetszentmarton (HU); Toth, Zoltan, 9700 Szombathely (HU)
(74) Representative: Franke, Dirk

(57) **Abstract**

An interface between a mobile device and external services and the user that provides a single location for controlling and seeing the status of the device and the services. The user interface has a tab bar with a tab for each of the registered services. When a service is selected, a status wheel ring is displayed with a number of status field buttons for the user to select a status to be active. A short tap on the status field selects the status field and performs an action. The device is registered with a central server from which the user can subscribe to services. Each service provides a descriptor for generating its status wheel.

## Description

### BACKGROUND OF THE INVENTION

### Field of the Invention

The present invention relates to mobile devices, more particularly, to controlling the device and external services.

### The Prior Art

In computer and telecommunication networks, automatically-, semi-automatically-, and manually-controllable information flow is a critical requirement to interconnect smart devices, sensors, etc. A basic feature of a smart device, sensor, or any device that can communicate with others is a status manager. A status manager is part of the user interface that is used to control the information flow. Each status manager typically consists of a few statuses (for example: available, busy, on, off, sleeping, etc.) that can be set automatically, semi-automatically, or manually. Automatic settings can occur as a result of a triggered event such as a temperature increase or decrease for a thermostat, low battery on a smoke detector, the device on a phone call, the user is in a vehicle, etc., or combinations thereof. Semi-automatic settings can occur as a result of a triggered event or combinations in conjunction with a user pre-set threshold. For example, a status change is triggered only if the temperature read by the thermostat exceeds a specific limit set by the user. A manual status change can occur if a user triggers a status change. For example, user taps a specific on or off status that triggers the change and instructs the thermostat to turn heating on or off.

Existing applications provide a service platform for those uniquely-identifiable devices and sensors. The application manages and sets automated status changes and shares them via the Internet. It creates a more advanced and interconnected way to manage the flow of information for faster communication, especially in automation. One can register at least one uniquely-identifiable device and/or sensor using the application and can set a status either manually or by means of the automatic mode. The application regularly receives information from the registered device and/or sensor about its current status (the current status as well as any additional information such as custom text, time, weather info, etc.) which is displayed to other application users, who are connected to the user within the system and are authorized by the user to receive such information.

There is a demand to interpret, visualize and display these services and statuses in human-readable form. Also, there is a demand to grant interoperability for a human user to control, set, or combine these statuses and services.

### SUMMARY OF THE INVENTION

The present invention is an interface between a mobile device and external services and the user that provides a single location for controlling and seeing the status of the device and the services. Each item that the status manager can control or view the status of is referred to as an entry. Services can include any application that is not the device itself.

The basic user interface of the status manager of the present invention has an entry tab bar at the top where there is a tab for each of the entries registered with the status manager. Each entry tab includes the entry's name and/or icon. Optionally, the icon can be used to indicate the entry's current status.

The selected entry has its details displayed in the status information block. The status information block includes an automatic mode switch controlling an optional automatic mode of the entry, a status wheel displaying available status options, and an additional status information area.

The automatic mode switch turns an automatic mode on or off and is a function of the particular entry that it is associated with.

The status wheel displays status options available as a ring or multiple concentric rings. The ring has a number of sectors, referred to as a status fields, that act as buttons for the user to select a status to be active for the currently-chosen entry. The descriptive name of the currently active status appears in the center of the status wheel. A short tap on the status field selects the status field. If enabled, a long tap on the status field opens a settings page where the settings for the status field 44 can be changed.

The message area below the status wheel displays a text string assigned to the current status.

Each entry has an entry descriptor that defines the status manager configuration for the entry and contains a number of members depending on the particular implementation of the system. Typical members include a label, tab icon, number of rings, whether or not the automatic switch is used, and a table of status fields. Each status field table entry contains member describing the status field. Typical members include a title, default message, icon or icon URL, short tap action, long tap action, focus color, and selected color.

When the status manager user interface is invoked, all registered entries are displayed in the entry tab bar using information from the entry descriptors in local storage. When an entry tab is selected, the status manager uses the corresponding entry descriptor plus local information regarding the current status of the entry to build the display for the information block. When a status field is tapped by the user, the status manager changes the status field to show that it is selected. If the status field has an action associated with it, the action is performed.

The device is registered with a central server. Upon registration, the device is granted access to the servers services repository so that the user can subscribe to services. After selecting a service, the central server sends the entry descriptor defined by the service provider. The service provider sends communicates with the central server and the central server sends the status to the subscribers and the status application uses the service's status wheel to indicate the current status of the service.

To control his own status, user taps the entry tab associated with the device in order to bring up that associated status wheel. From the status wheel, the user sets his own status manually or turns on the automatic switch so that the device determines its own status automatically.

Objects of the present invention will become apparent in light of the following drawings and detailed description of the invention.

### BRIEF DESCRIPTION OF THE DRAWINGS

For a fuller understanding of the nature and object of the present invention, reference is made to the accompanying drawings, wherein:
FIG. 1 is a hardware diagram of a basic cellular telephone and computer network system on which devices using the present invention operate;
FIG. 2 is a block diagram of a basic device on which the present invention operates;
FIG. 3 is a diagram of an example interface of the status manager of the present invention; and
FIG. 4 is a diagram of an alternate status wheel for the diagram of FIG. 3.

### DETAILED DESCRIPTION OF THE INVENTION

One aspect of the present invention is an interface between a mobile device and external services and the user. The interface gives the user a single location for controlling and seeing the status of the device and the services. Each item (device, application, service, etc.) that the status manager can control or view the status of is referred to as an entry.

The status manager of the present invention operates on entries that are registered with the status manager. Entries can be one of two types, a hardware entry or a virtual entry.

A hardware entry is the hardware device on which the present invention is installed and can include mobile phones and tablets. The device will typically have a status application running that provides status information about the device. The status manager of the present invention will typically sit on top of the status application. The hardware entry is also referred to as the device, which means the device that the status manager is running on.

A virtual entry is anything that is not the device itself and can include other applications, hardware, and services. For example, a virtual entry can be a video game running on the device, a smart watch having direct communications with the device, a networked device such as a networked thermostat that communicates through the Internet, or a take-out restaurant that accepts orders online. Virtual entries are also referred to as services.

This specification first describes the hardware on which the system operates, then the interface and its components, and finally how the interface is set up and used.

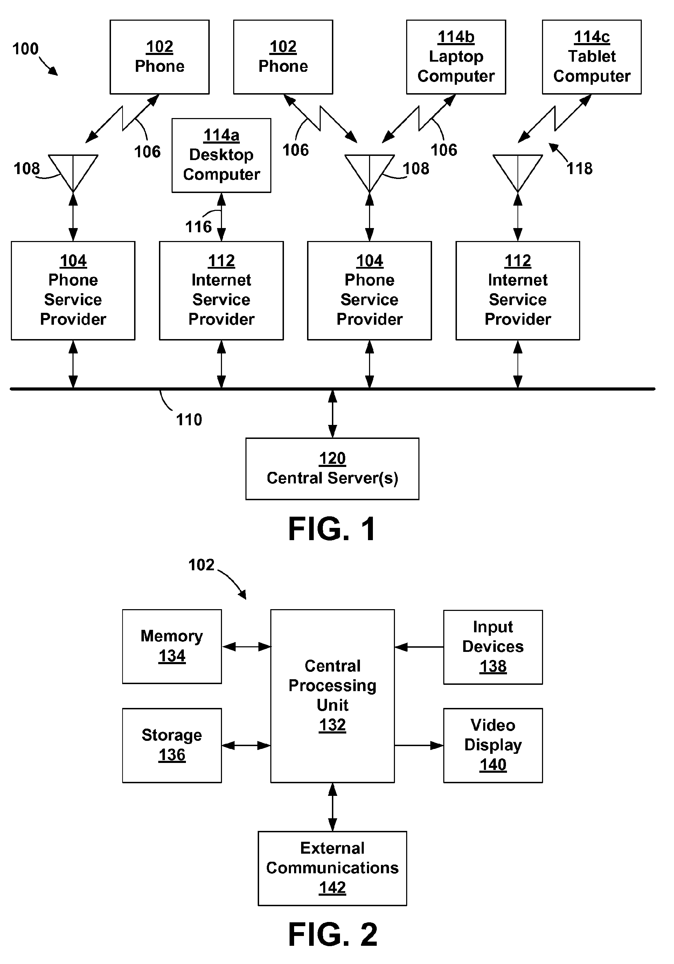

A basic hardware system 100 on which devices incorporating the present invention operate is shown in FIG. 1. The service for cell phones 102 is provided by wireless phone service providers 104, which provide a wireless telephone networks and access to a global computer network 110, the Internet, as at 106. They do so via networks of antennas 108 and their associated infrastructures. Internet service providers 112 provide access to the Internet 110 for desktop computers 114a, laptop computers 114b, and tablet computers 114c. The connections can be hard-wired 116 or through a wireless network (Wi-Fi) connection 118. Computers 114 may also access the Internet 110 through a wireless phone service provider 104, like laptop computer 114b.

A block diagram of a device 102 and computer 114 is shown in FIG. 2. Each device 102 has a central processor 132, memory 134, storage 136, input devices 138, video display 140, and an external communications 142 that connects the device 102 to the Internet 110. Typically, at least one input device 138 is a touch sensitive video display. Optionally, at least one input device 138 is a cursor on the video display 140 that is controlled by a mouse or other pointing mechanism.

An Internet Protocol address (IP address) is a label assigned to each device (e.g., computer, printer, phone, etc.) participating in a computer network that uses the Internet Protocol for communication. An Internet Protocol Version 4 (IPv4) address consists of 32 bits, which provides a limited address space for unique addresses. Because of the limited number of addresses available using IPv4 and the proliferation of devices that connect to the Internet, IPv6, with a 128-bit address size, has been developed. An IP address is assigned to a device either at the time of a device restart or permanently by a fixed configuration in the hardware or software of a device.

IP addresses are assigned to a device either permanently or temporarily. When an IP address is assigned permanently, the device has a static IP address that will always identify the same device. Temporarily assigned IP addresses - dynamic IP addresses - can change periodically. Dynamic IP addresses help to ease the limitation of IPv4 address space. The main idea is that not all devices are connected to the Internet continuously. As a device disconnects, the dynamic IP address is released and assigned to the next device that connects to the network. The IPv6 address space makes it possible to assign static IP addresses for each device and these assigned IP addresses do not need to be released it even if it is not connected to the network. IPv6 unlocks a range of opportunities for network operations of mobile devices.

Every physical network interface has a unique Media Access Control address (MAC address). MAC addresses are usually assigned by the device manufacturer and are generally stored in hardware, read-only memory, or other firmware mechanism. The MAC address is permanent and identifies a particular network interface.

A Globally Unique Identifier (GUID) is a unique reference number used as an identifier. It is usually a 128-bit value.

Every device has a unique serial number that is assigned by the manufacturer. Devices from different manufacturers may have the same serial number, but can be differentiated by the manufacturer.

As an initial matter, the present invention requires that the user register with a central server 120 using a unique identifier. The unique identifier can be a phone number, email address, domain name, static IP address, MAC address, a globally unique identifier, or other unique identifier. The registration step can happen through a Web-based portal or through an application.

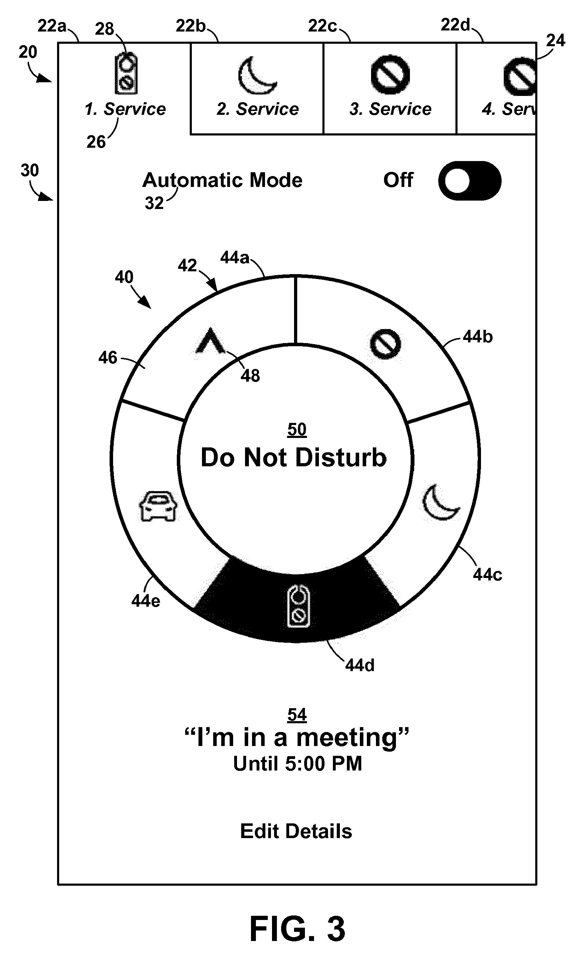

FIG. 3 shows the various components of the basic user interface of the status manager of the present invention.

The entry tab bar 20 has an entry tab 22a, 22b, 22c, 22d (collectively, 22) for each entry registered with the status manager. The entry tab bar 20 may contain any number of entry tabs 22. Entry tabs 22 that do not fit on the device's display may extend to the right outside the visible area, as at 24. In this case, the entry tabs 22 may be scrolled horizontally through the entry tab bar 20 to reach entry tabs 22 not initially visible. Horizontal scrolling is a function of the device and is performed in whatever manner is available. On many devices, horizontal scrolling can be performed by swiping horizontally with a finger.

Typically, the first entry tab 22a, that is, the entry tab 22a farthest to the left, will be for the device/status application and the remainder of the entry tabs 22 will be for various virtual devices.

Each entry tab 22 includes the entry's descriptive name 26 and/or an icon 28 associated with the entry. Alternatively, the icon 28 can be used to indicate the entry's current status. In this way, the user only has to scroll through the entry tab bar 20 to check the current status of an entry, rather than having to select the entry to bring up the status, as described below. The current status depends on what entry is. If the entry is a service, the current status is the current status of the service, which will typically be whether or not the service is currently available to the user. If the entry is the device, the current status may be the current status of the device or user, that is, whether or not the device/user is available to others.

The currently selected entry tab 22a is denoted by background and content colors different from the other entry tabs 22b, 22c, 22d. Entry tabs 22b, 22c, 22d not currently selected for editing are shown with background and content colors different from those of the selected entry tab 22a.

The selected entry has its details displayed in the status information block 30, the area of the display that displays information and editing features associated with the entry. The status information block 30 includes an automatic mode switch 32 controlling an optional automatic mode of the entry, a status wheel 40 displaying available status options, and an additional status information area 54.

The automatic mode switch 32 turns an automatic mode on or off and is a function of the particular entry that it is associated with. For example, if the entry can provide presence information, the automatic mode switch 32 instructs the entry whether or not to provide the presence information automatically. If the entry does not have an automatic function, the automatic mode switch 32 is not displayed.

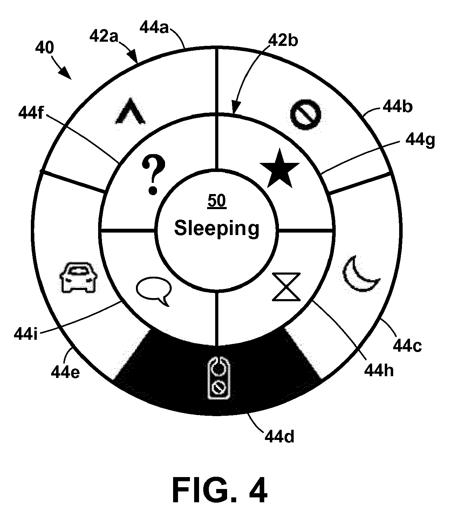

The status wheel 40 displays status options available for the selected entry. The status wheel 40 is a ring 42, as in FIG. 3, or multiple concentric rings 42a, 42b, as in FIG. 4, comprised of a number of ring sectors 44a, 44b, 44c, 44d, 44e, 44f, 44g, 44h, 44i (collectively, 44). Each sector 44, referred to as a status field, acts as an interactive button for the user to select a status to be active for the currently-chosen entry.

Each status field 44 has a background 46 and an icon 48 identifying the status option associated with the status field 44. The currently-active status field 44d is denoted by particular background and icon colors different from those of the inactive status fields 44a, 44b, 44c, 44e, 44f, 44g, 44h, 44i. Currently inactive status fields 44a, 44b, 44c, 44e, 44g, 44h, 44i are denoted by background and icon colors different from those of the active status field 44d.

In addition to the icon 48 in the active status field 44, the descriptive name of the currently active status appears in the center 50 of the status wheel 40. This can be a simple text field, a clickable text field, or a button. If it is a clickable text or a button, further menu options can be displayed if user long taps or clicks on it. For example, the menu can give the user the option to personalize the status wheel 40, to show or hide a specific status fields 44, and/or to show or hide a specific ring 42 if multiple rings are available.

A short tap on the status field 44 selects the status field 44. If enabled, a long tap on the status field 44 opens a settings page where the settings for the status field 44 can be changed. For example, an automatic or manual mode for the status field can be changed to indicate that he wants to add or remove the status from automatic or manual mode. In another example, the settings can be used to change the status field title or message.

By default, the message area 54 below the status wheel 40 displays a text string in a text field 56 assigned to the current status. For example, hot, cold, or warm. The text can be redefined by the user. If the user taps on the text field 56, the text can be edited. Optionally, the text field 56 has a reset functionality that is represented by a symbol, currently an 'x'. If the user taps on the 'x', the text field resets to the default descriptive text of the currently active status.

Each entry has an entry descriptor that defines the status manager configuration for the entry. An entry can provide its own entry descriptor or can use a predetermined default entry descriptor that can be altered by the user.

A provider of a service makes the entry descriptor available through the Internet. The information within the entry descriptor depends on the nature of the service. The status manager does not restrict the number of statuses and the attribute values (colors, labels, icons).

The entry descriptor contains a number of members. There may be other members depending on the particular implementation of the system.
(1) Label: The title 26 displayed in the entry tab 22.
(2) Tab Icon: The icon 28 displayed in the entry tab 22.
This icon 28 can be a general icon that identifies the entry or can be a series of icons that are changed depending on the current status of the entry.
(3) Rings: The number of rings in the status wheel.
(4) Automatic: Flags if the automatic switch is to be used.
(5) Status field table: A table that includes a status field definition for each possible status of the entry. Each status field definition typically includes the following members:
   (a) ID: The internal identifier of the status field.
   (b) Title: The title for the status field that is displayed in the center 50 of the status wheel 40.
   (c) Default message: The default detailed message of the status that is displayed in the message area 54.
   (d) Icon: The icon 48 that is displayed in the status field 44. If the icon is a font character, this field can be a character code, otherwise this field points to an icon image.
   (e) Icon URL: The icon remote resource URL. Rather than having an icon local, the URL points to where the icon can be found on the Internet. It is used by services that provide definition files online.
   (f) Short tap action: If the status field has an action associated with a short tap, the action to be performed when the status field is short-tapped by the user.
   (g) Long tap action: If the status field has an action associated with a long tap, the action to be performed when the status field is long-tapped by the user.
   (h) Focus color: The color of the status field 44 for when the status field 44 has the focus but is not selected.
   (i) Selected color: The color for the status field 44 when it is selected.

The predetermined default entry descriptor includes a number of generic status fields. Examples include Available, Unavailable, Busy, Do Not Disturb, In Vehicle, Sleeping, On a Call, Event, Low Battery, and Silent. As indicated above, the generic status fields can be deleted and altered and new status fields can be added.

Each status field 44 represents a parameter associated with the entry. For example, if the entry is a home thermostat, there are status fields representing each viewable and settable parameters of the thermostat such as the ambient temperature, the target temperature, hold at the current temperature, etc.

A service can extend another service's functionality. In other words, a service can utilize an existing service and add an extension to it. An extension service can affect the status of the service being extended (the target service) by introducing new status fields 44. The extension supports all status functionality such as detail text, custom colors, custom icon, optional long tap action, and visibility on the status wheel 40.

When the status manager user interface is invoked, all registered entries are displayed in the entry tab bar 20 using information from the entry descriptors in local storage. The current or default entry tab 22 is shown as selected. When an entry tab 22 is selected, the status manager retrieves the corresponding entry descriptor. Using information from the entry descriptor plus the locally-stored information regarding the current status of the entry, the status manager changes the entry tab 22 to show that the entry is selected, retrieves the corresponding status field table from the entry descriptor, and builds the display for the information block 30.

The information necessary for the current status of the entry depends on the entry. For example, if the automatic switch 32 is being used, there will be a flag that indicates whether the automatic switch 32 is currently on or off. In another example, if the entry is a thermostat, there can be information regarding the current ambient temperature and the current target temperature.

The status fields 44 are displayed as the status wheel 40. The size of each status field 44 depends on the number of status fields 44 and whether or not the status fields 44 are to be the same size. Optionally, the status field definition includes a field containing the size of the status field 44 in, for example, degrees of arc. Optionally, the status field definition includes a field containing the position of the status field in, for example, degrees of arc. With these size and position fields, more common or more important status fields 44 can be displayed larger and in more prominent positions than less common and less important status fields 44. The currently-selected status field is shown in its selected color scheme and its status text is shown in the center 50 of the status wheel 40.

If the entry descriptor shows that the entry employs the automatic mode switch 32, the switch 32 is displayed along with its current status, either on or off.

When a status field is tapped by the user, the status manager changes the status field to show that it is selected. If the status field has an action associated with it, the action is performed. The action may be to notify the status application or service corresponding to the entry that the status field has been tapped. Alternatively, the action may be local, that is, the status manager performs an operation locally or invokes a local operation.

If the status wheel 40 has multiple rings 42a, 42b, then one can easily set a combined status by dragging and dropping a status field 44 from one ring to a status field 44 of the other ring. For example, one can drag and drop the sleeping status 44c of the outer ring 42a to the chat status 44i of the inner ring 42b indicating that he is sleeping but available to chat.

As described above, the device is registered with a central server in order to use the status manager of the present invention. Upon registration, the central server stores the device's unique identifier in its user database and grants the device access to its services repository. The service repository contains the entry descriptors for all available services and a list of subscribers to each service.

The server has published application interfaces (public API) in the form of a REST (Representational State Transfer) interface. A service provider publishes its status or a created and published service can easily send or receive data to/from the central server utilizing these RESTful public APIs. The server logic decides what to do with the provided incoming data. The server might pass the data through unmodified or combine the data with other available information. The server determines the subscribers of the service and sends the data to the status application of the device for processing. The status application can utilize RESTful APIs to propagate the information for visualization and control to/from the status manager. In this sense, the status manager can be embedded into any status application for visualization and control purposes. The status manager propagates all status changes or control action back to the status application using the application RESTful APIs, then the status application propagates the new information to the central server using the server's RESTful APIs. In the push model, the central server is also capable of calling any RESTful APIs published by a third-party and publish the available data. In the pull model, the third-party is responsible for calling the server's RESTful APIs periodically and fetching the data.

After device registration, the user can control the device's status and/or to subscribe to services.

To control his own status, the user taps the entry tab 22 associated with the device in order to bring up that associated status wheel 40. From the status wheel 40, the user sets his own status manually or turns on the automatic switch so that the device determines its own status automatically. If the automatic status detection is turned on, then the status application utilize the device's built-in sensors to determine the current status of the device. The status application then either considers the determination complete or sends the determined device status to the central server for further logical decision. The central server can combine the statuses of the devices based on a predetermined and configurable logic and then send back the determined status to the status application. In both cases, the status application sends the final status for visualization to the status wheel 40. The status wheel 40 presents the status of the device as a representation of the user's status.

To subscribe to a service, the user can use a Web portal or an application that provides a service browser to select from all the services available for subscription. After the selection, a service identifier is sent to the central server. The central server sends back the entry descriptor. The entry descriptor is defined by the service provider at service creation to provide all the information about the service needed by the status manager.

The service provider sends information to and receives information from the central server using the provided public application interface. The central server sends the status to the subscribers and the status application uses the service's status wheel 40 and, optionally, the entry tab icon 28 to indicate the current status of the service.

In an example, a take-out restaurant provides a service that has a single ring with two status fields 44: "Available to take orders" and "Not available." If the restaurant is available to take orders, the Available status field is highlighted. Otherwise, the Not Available status field is highlighted. Alternatively, there is only one status field 44 that shows either Available or Not Available.

The entry descriptor also defines an action. If the status is "Available", then long tapping the Available status field brings up a menu from which the user can order. The Pizza studio sends the new service for approval to the central service repository. After approval, the new service will be available for subscription.

Thus it has been shown and described a dynamically reconfigurable service and status manager Since certain changes may be made in the present disclosure without departing from the scope of the present invention, it is intended that all matter described in the foregoing specification and shown in the accompanying drawings be interpreted as illustrative and not in a limiting sense.

## Claims

1. A method of monitoring and controlling the status of a device (102) and services available to the device, the device (102) including a touch screen video display (140), the method comprising the steps of:
(a) operatively connecting the device (102) to a global computer network (110);
(b) operatively connecting a server (120) to the global computer network (110);
(c) registering the device with the server (120);
(d) subscribing to a service as an entry, the entry having at least one parameter;
(e) acquiring an entry descriptor associated with the entry, the entry descriptor including an entry label and a status field table, the status field table having at least one status field definition including a status title, a message, and a short tap action that operates on the at least one parameter;
(f) displaying, on the display (140), a tab bar (20) with an entry tab (22) for the entry, the entry tab (22) displaying the entry label (26) and being tappable to select the entry;
(g) receiving a tap on the entry tab (22) to select the entry as a selected entry;
(h) displaying a status wheel (40) for the selected entry in a status information block (30) on the display (140) using the entry descriptor, the status wheel (40) including at least one ring (42) divided into sectors (44), each sector (44) operating as a status field (44) defined by an associated status field definition from the entry descriptor, the sector (44) displaying the associated status title (48);
(i) receiving a short tap on the at least one status field (44) to select the status field (44) as the selected status field (44); and
(j) performing the short-tap action associated with the selected status field (44).

2. The method of claim 2 further comprising changing the appearance of the selected status field (44) to show that it is selected.

3. The method of claim 2 further comprising displaying a name of the selected status field (44) in the center (50) of the wheel (40).

4. The method of claim 2 wherein the status field definition further includes a long-tap action and performing the long tap action if a long tap is received on the status field (44).

5. The method of claim 2 wherein the status information block (30) includes a message area (54) and displaying a message associated with the current status of the selected entry in the message area (54).

6. The method of claim 2 wherein the short tap action sends an instruction to the associated service.

7. The method of claim 2 wherein the entry is the status of the device (102), the at least one status field (44) includes a plurality of status fields (44) each corresponding to a possible status of the device (102), and short-tapping a status field (44) sets the device to the associated status and sends the associated status to the central server (120).

8. The method of claim 2 wherein the entry descriptor includes an automatic mode field and, if the automatic mode field is set, the status information block (30) includes an automatic mode switch (32) for turning an automatic mode for the entry on and off.
